# EUROPEAN PATENT SPECIFICATION

(11) **EP 3 549 888 B1**
(45) Date of publication and mention of the grant of the patent: **30.12.2020**
(21) Application number: 19166460.6
(22) Date of filing: 01.04.2019
(51) Int. Cl.: B65G 21/20, B65G 21/22, B65G 17/08

(54) **RETURN GUIDE FOR GUIDING THE RETURN BRANCH OF A CHAIN OF A CHAIN CONVEYOR, IN PARTICULAR A CURVED RETURN GUIDE**
UMLENKFÜHRUNG ZUR FÜHRUNG DER RÜCKVERZWEIGUNG EINER KETTE EINES KETTENFÖRDERERS, INSBESONDERE EINER GEKRÜMMTEN UMLENKFÜHRUNG
GUIDE DE RETOUR POUR GUIDER LA BRANCHE DE RETOUR D'UNE CHAÎNE D'UN CONVOYEUR À CHAÎNE, EN PARTICULIER UN GUIDE DE RETOUR INCURVÉ

(30) Priority: 03.04.2018 IT 201800004175
(43) Date of publication of application: 09.10.2019
(73) Proprietor: Regina Catene Calibrate S.p.A., 20122 Milano (MI) (IT)
(72) Inventor: GARBAGNATI, Carlo, 23884 Castello di Brianza (LC) (IT); CATTANEO, Norberto, 20865 Usmate Velate (MB) (IT)
(74) Representative: Cosenza, Simona

(56) References cited:
- EP-A1- 0 903 307
- WO-A1-92/11191
- US-A- 4 961 492

## Description

The present invention relates to a return guide for guiding the return branch of a chain of a chain conveyor. In particular, the present invention relates to a curved return guide. Even more in particular, the present invention relates to a curved return guide that can be used coupled with a forwarding guide for the forward branch of the chain of a chain conveyor of the so-called "magnetic" type, that is wherein the plates of the chain links are held in sliding support on the respective sliding surfaces by magnetic attraction.

In general, the chain of a chain conveyor comprises a plurality of links, which are mutually articulated by means of pivoting and each of which has a pivoting portion for pivoting with the preceding and the subsequent link and a generally plate-like portion, which extends transversely to the direction of movement of the chain and defines a resting surface for products to be transported.

Magnetic curved guides are known, as for example described in EP0903307B1, which comprise a forwarding guide for the forward branch (or upper branch) of the chain and a return guide for the return branch (or lower branch) of the chain. EP0903307B1 discloses a return guide according to the preamble of claim 1.

The forwarding guide has a central channel, wherein the pivoting portions of the links are received, and a pair of rails arranged at the sides of the central channel and each identifying a sliding surface for the sliding on it of at least a respective end portion (wing) of the plates of the links.

The links of the chain are held in sliding support on the respective sliding surfaces of the rails by the magnetic attraction exerted by magnets received in seats obtained in the guide, the chain being entirely or partially made of ferromagnetic material.

The return guide also has a central channel in which the pivoting portions of the links are received and which is laterally delimited by a pair of walls. Each wall has along its respective inner side (i.e. the side facing the other wall) a respective longitudinal groove identifying a sliding channel wherein a respective end portion (wing) of the plates of the links is received.

The present invention relates to return guides of the type described above, wherein the chain links of the return branch are supported mechanically.

As it is known, in a return guide the dimensions of the central channel, wherein the pivoting portions of the links are received, and of the sliding channel, wherein end portions of the plates of the links slide, vary with the variation of the geometry of the chain and, in particular, of the width of the pivoting portions and of the width and thickness of the plates.

With the same width of the pivoting portions and with the same width of the plates, the height of the sliding channel wherein the end portions of the plates slide varies as the thickness of the plates varies.

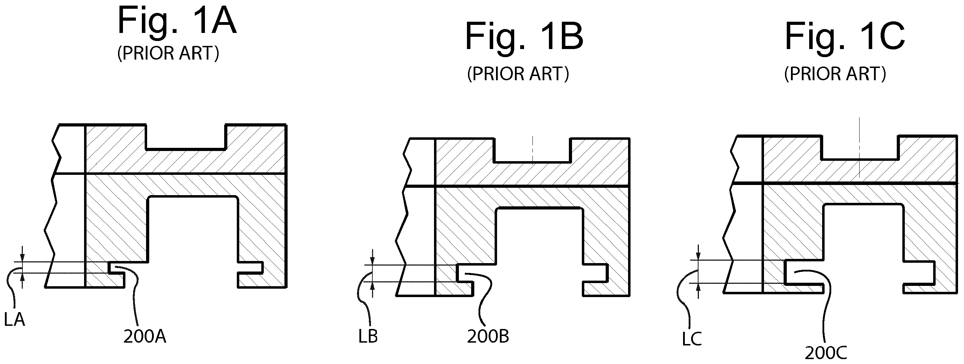

According to the known art, therefore, a multiplicity of return guides exists which differ only from one another in the height of the sliding channel (i.e. of the respective longitudinal groove forming it) wherein the end portions of the plates slide. Figures 1A, 1B and 1C show curved guides according to the known art; note that the guides differ from one another only with respect to the height LA, LB, LC of the sliding channel wherein the plates of the chain slide along the return guide, "height" being intended as the size of the sliding channel or of the relative groove measured orthogonally to the flat surfaces thereof which extend parallel to the plate-like portions of the chain and of which the lower one forms a sliding surface for the plate-like portions of the chain. Thus, for example, the sliding channel 200A of the return guide shown in figure 1A has a height LA of 6 mm for receiving plates having a thickness of 3 mm or 4 mm. The sliding channel 200B of the return guide shown in figure 1B has a height LB of 10 mm for receiving plates having a thickness of 8.7 mm. The sliding channel 200C of the return guide shown in figure 1C has a height LC of 14 mm for receiving plates having a thickness of 12.7 mm.

It is clear that such a known technique is disadvantageous in terms of production and warehouse costs and in terms of functionality; for each different type of chain and, in particular, for each chain that differs from the others only in the thickness of the plates, it is necessary to have a different return guide.

In order to overcome this drawback, an attempt was made to size the sliding channel (i.e. the longitudinal groove forming it) as a function of the maximum thickness of the chain plates and to use the return guide thus dimensioned also for chains with lower thickness plates.

However, such a solution proved to be not practicable. In fact, at curves the chain tends to rest with its own pivoting portions on the inner side of the wall which delimits the radially innermost central channel with respect to the centre of curvature. As the thickness of the plates decreases, the support surface between the pivoting portions and the inner side of this wall is reduced to values such as to compromise the functionality of the conveyor; in particular, the chain is subject to anomalous wear and tends to jam.

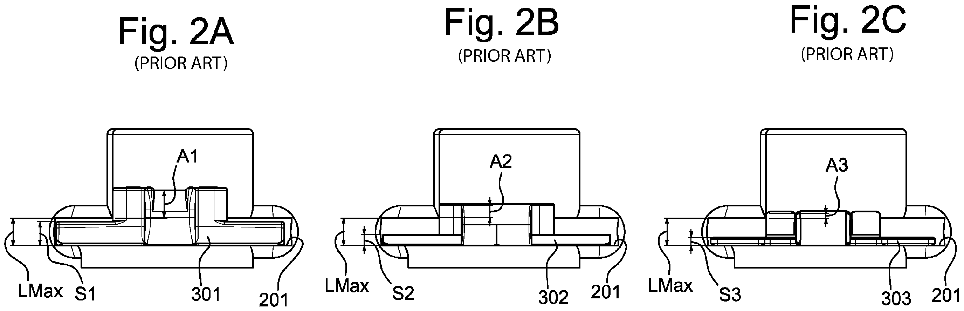

Figures 2A, 2B and 2C schematically show the situation described above with reference to a curved return guide with its centre of curvature placed on the left in the drawings. Each of said figures shows a same return guide, whose sliding channel 201, wherein the end portions of the plates slide, is dimensioned as a function of the maximum thickness of the latter; in particular, it has a height Lmax equal to 10 mm for example. Figures 2A, 2B and 2C differ from each other in the dimensions of the chain housed in the guide: the chains differ from one another in the thickness of the respective plates 301, 302, 303 respectively indicated with S1, S2, S3, where S1>S2>S3 (for example S1=8.7 mm, S2=4 mm and S3=3 mm). Note that the support surface between the respective pivoting portions and the inner side of the wall that delimits the central channel and is more radially internal with respect to the centre of curvature has a height A1, A2, A3 which decreases (respectively 9.8 mm, 4.46 mm and 1.75 mm) as the thickness of the plates decreases, which compromises the correct guided sliding of the chain along the return guide.

An aim of the present invention is to overcome the drawbacks of the prior art.

An object of the present invention is to provide a return guide for guiding the return branch of a chain of a chain conveyor, in particular a curved return guide, which can be standardised, with the consequent containment of the relative production and warehouse costs.

Another object of the present invention is to provide a return guide for guiding the return branch of a chain of a chain conveyor, in particular a curved return guide, which ensures correct operation of the conveyor without affecting the stability of the guide or the slidability and retention of the chain in its seat.

Another object of the present invention is to provide a return guide for guiding the return branch of a chain of a chain conveyor, in particular a curved return guide, which is particularly simple and functional, with lower costs.

These objects according to the present invention are achieved by providing a return guide for guiding the return branch of a chain of a chain conveyor, in particular a curved return guide, as described in claim 1.

Further characteristics are envisaged in the dependent claims.

The characteristics and advantages of a return guide for guiding the return branch of a chain of a chain conveyor, in particular a curved return guide, according to the present invention will therefore be more apparent from the following exemplifying and nonlimiting description, in reference to the attached schematic drawings in which:
figures 1A, 1B and 1C are a schematic section of curved forwarding guides and return guides according to the prior art;
figures 2A, 2B and 2C schematically show a curved return guide according to the prior art housing chains which differ from one another in the thickness of the respective plates;
figure 3 is a schematic, axonometric and exploded view of a possible embodiment of the return guide according to the present invention;
figure 4 is a plan view from above of the return guide of figure 3, without the inlet or outlet skid;
figures 5 and 6 are sections according to the plane V-V and VI-VI of figure 4, respectively;
figure 7 is a plan view from above of a portion of the base body of a return guide according to the present invention;
figure 8 is a section view according to the plane VIII-VIII of figure 7;
figures 9 and 10 are section views according to the planes IX-IX and X-X of figure 8, respectively;
figure 11 is an axonometric view of an insert element of the return guide according to the present invention;
figures 12A to 12D are schematic front views of the return guide of figure 3 housing chains which differ from one another in particular in the thickness of the respective plate-like portions and wherein a possible embodiment of the forwarding guide has been indicated with a dashed line;
figure 13 is an axonometric and exploded view of a second possible embodiment of the return guide according to the present invention;
figure 14 is a front view of the return guide of figure 13.

With reference to the attached figures, a return guide 10 is shown for guiding the return branch of the chain 100 of a chain conveyor.

It is note that in the following description adjectives such as "lower" and "upper" and adverbs such as "high" and "low" refer to the return guide 10 considered in the usual conditions of use. Adjectives such as "longitudinal" and "transverse" refer to the development of the return guide 10 respectively along the guide path and transversely to it, unless otherwise specified.

The chain 100 is of a type known to the person skilled in the art and is not an object of the present invention; for this reason it is only schematically represented in some of the attached figures.

The chain 100 comprises a plurality of links 101, which are pivoted to one another at respective pivoting portions 102 by means of respective pins not shown and each of which is provided with a plate-like portion 103 (for the sake of simplicity indicated also only as "plate 103") defining along the forward branch a conveying surface on which products to be transported are placed in support.

In one possible embodiment, the links 101 can be at least partly made of magnetizable material or of plastic material wherein a charge of particles of magnetizable material is dispersed, or they can be made of plastic material and the pins which articulate them can be made of a magnetizable material. Magnetizable material is intended, in particular, as a ferromagnetic material.

The chain 100 is wound in a loop around driving and return wheels, not shown as they are of known type, and forms a forward branch or upper branch and a return branch or lower branch.

The return guide 10 according to the present invention is provided for guiding the return branch or lower branch of the chain 100.

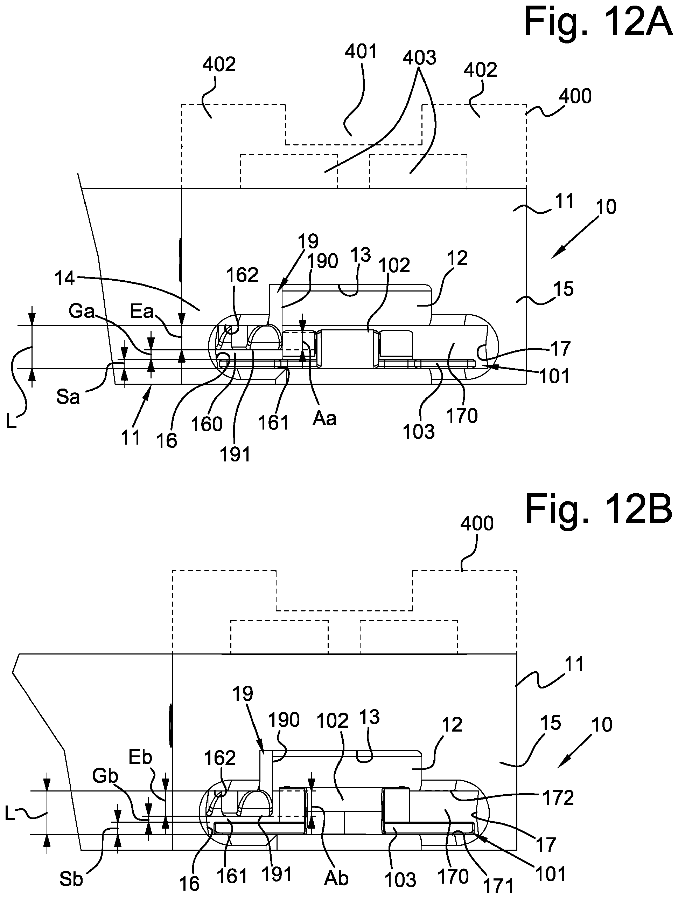

The return guide 10 can be coupled with a forwarding guide 400 of the forward branch of the chain 100. The forwarding guide 400 is not an object of the present invention, is not described in detail and is only schematically represented in some of the attached figures for this reason (figures 12A-12D). In general terms, the forwarding guide 400 has at least one central channel 401 which receives the pivoting portions 102 and which is laterally delimited by a pair of rails 402 whose upper surface defines a support and sliding surface of the end portions (wings) of the plates 103.

In a preferred embodiment, the forwarding guide 400 is of the so-called "magnetic" type. In it, i.e., the links 101 of the chain (at least partly made of ferromagnetic material as described above or articulated by pins made of ferromagnetic material) are held in position by the magnetic field generated by magnetic bodies 403, which are housed in seats obtained in the body of the forwarding guide 400 or in the base body 11 of the return guide 10 at the bottom of the central channel 401 extending to below the rails 402 or inside the latter.

The return guide 10 can be shaped like an arc of a curve. The attached figures refer to a return guide 10 in an arc of a curve with a centre of curvature CC arranged on the left when looking at the drawings.

The return guide 10 comprises a base body 11 in which at least one central channel 12 is obtained wherein the pivoting portions 102 of the links 101 are received.

The central channel 12 is open downwards; it has a bottom 13 substantially flat and parallel to the ground.

The base body 11 then comprises a pair of walls 14 and 15 which are arranged at the sides of the central channel 12.

With reference to the attached figures, the wall 14 is the one which is arranged radially innermost with respect to the centre of curvature CC of the return guide 10, while the wall 15 is the one which is arranged radially outermost with respect to the centre of curvature CC of the return guide 10.

Each wall 14, 15 has an inner side which faces the other wall 14, 15.

Each wall 14, 15 comprises, on the respective inner side, a longitudinal groove 16, 17 identifying a respective sliding channel 160, 170 wherein end portions of the plates 103 are slidably received. Each groove 16, 17 has a lower side 161, 171 and an upper side 162, 172 which are substantially flat and substantially parallel to one another; they are generally substantially parallel to the bottom 13 of the central channel 12. The lower side 161, 171 is more distant from the bottom 13 of the central channel 12 with respect to the upper side 162, 172. The lower side 161, 171 defines a support surface on which the end portions of the plates 103 of the links 101 of the chain's return branch slide.

The base body 11 comprises at at least one of the two walls 14, 15 at least one hollow seat 18 which is open at least at the respective groove 16, 17 and in which a respective insert element 19 is housed which is supported by the base body 11 in a slidably guided manner along a direction D substantially orthogonal to the lower sides 161, 171 and upper sides 162, 172, of the respective groove 16, 17 or to the bottom 13 of the central channel 12. The insert element 19 is slidable along the direction D between at least one extended position in the respective groove 16, 17 and at least one partially retracted position from the respective groove 16, 17, being able to assume, obviously, a plurality of intermediate positions.

With reference to the attached figures, the at least one hollow seat 18 is obtained in the walls 14, 15; in this case, the respective insert element 19 is slidable along the direction D between at least one extended position in the respective groove 16, 17 and one substantially retracted position from the respective groove 16, 17, being able to assume, obviously, a plurality of intermediate positions.

It is noted that "substantially retracted position" is intended as indicating a position wherein the insert element 19 is completely or almost completely retracted in the respective hollow seat 18, being able to project at most a few millimetres below it (generally less than 5 mm, preferably less than 2 mm) .

The insert element 19 is constituted by a geometric solid.

The insert element 19 has a first face 190 which laterally delimits the central channel 12 and a second face 191 which is substantially orthogonal to the first face 190 and which delimits on the top the sliding channel 160, 170 defined by the respective groove 16, 17.

In greater detail, with reference to the embodiment shown in the attached figures, the hollow seat 18 is also open at the inner side of the respective wall 14, 15.

The at least one hollow seat 18 has, for example, a cross-section (i.e. on a plane orthogonal to the direction D) which is substantially C-shaped or U-shaped.

The at least one hollow seat 18 extends into a respective hollow housing 20 obtained in the base body 11 for containing and slidably guiding the respective insert element 19.

The hollow housing 20 has a first open end 21 in communication with the corresponding hollow seat 18 and a second end 22, opposite the first end 21, open and accessible from the outside of the base body 11 on the opposite side with respect to the bottom 13 of the central channel 12 for the insertion and removal therethrough of the respective insert element 19.

The second end 22 of the hollow housing 20 opens at the surface of the base body 11 which couples with the forwarding guide 400, i.e. the upper surface thereof.

The first end 21 of the hollow housing 20 opens near the bottom 13 of the central channel 12.

At least one stop element 23 is obtained in the hollow housing 20 between its first end 21 and its second end 22; the stop element 23 is envisaged for stopping the sliding of the insert element 19 in extended position thereof.

The stop element 23 is for example made of an annular projection obtained at the first end 21 of the hollow housing 20.

Obviously, the insert element 19 must have a respective counter-stop element cooperating with the stop element 23.

The insert element 19 has, for example, a resting surface 24, for example in the shape of a collar, adapted to rest on the annular abutment forming the stop element 23.

The insert element 19 is inserted with clearance in the hollow housing 20 and in the hollow seat 18.

The insert element 19 has at least one portion which has a shape substantially complementary to the hollow seat 18 and/or the hollow housing 20.

The first face 190 is substantially orthogonal to the lower sides 161, 171 and upper sides 162, 172 of the respective groove 16, 17 or to the bottom 13 of the central channel 12.

The first face 190 of the insert element 19 is substantially flat or slightly arched with a curvature conforming to that of the arc of a curve of the return guide 10. This first face 190 laterally delimits the central channel 12. That is, it defines a surface for containing and eventually supporting and sliding the pivoting portions 102 of the links 101.

The second face 191 is substantially flat and parallel to the lower sides 161, 171 and upper sides 162, 172 of the respective groove 16, 17 or to the bottom 13 of the central channel 12. This second face 191 is facing the lower side 161, 171 of the respective groove 16, 17; this second face 191 and the lower side 161, 171 of the respective groove 16, 17 laterally delimit the respective sliding channel 160, 170, at least when the insert element 19 is in its extended position.

The second face 191 of the insert element 19 is connected at its opposite longitudinal ends respectively to a head wall 193 and a tail wall 194 of the insert element 19; the head wall 193 and the tail wall 194 connect the first face 190 to a third face 195 which is opposite and substantially parallel to the first face 190.

Advantageously, the head wall 193 and the tail wall 194 are arched, preferably convexly arched, the respective walls of the hollow housing 20 and possibly of the hollow seat 18 having a shape substantially complementary to them so as to facilitate the guided sliding of the insert element 19, reducing the risks of jamming.

The connection between the second face 191 and the head wall 193 and the tail wall 194 has a bevel 196 adapted to facilitating the possible entry of the plates 103 into the sliding channel 160, 170.

The insert element 19 is slidably guided between its extended position and its at least partly retracted position from the respective groove 16, 17 as a result of its own weight and of the thrust eventually exerted thereon by the respective end portion of the plates 103 of the chain links.

That is, the insert element 19 is normally subjected to the action of the weight force only and assumes its extended position (i.e. completely extended). When the insert element 19 is in its extended position (i.e. completely extended), the respective sliding channel 160, 170 - which is laterally delimited by the lower side 161, 171 of the respective groove 16, 17 and by the second face 191 of the insert element 19 - has a minimum width or height H (measured orthogonally to the lower sides 161, 171 and upper sides 162, 172 of the respective groove 16, 17 or to the bottom 13 of the central channel 12).

The insert element 19 slides in a retracted or at least partially retracted position as a result of the thrust eventually exerted thereon by the end portions of the plates 103 in contrast to the weight force, if such plates 103 have a thickness greater than the minimum width or height H of the respective sliding channel 160, 170 as defined above (i.e. laterally delimited by the lower side 161, 171 of the respective groove 16, 17 and by the second face 191 of the insert element 19 considered in its fully extended position).

With reference to the embodiment shown in the attached figures, the insert element 19 has a height measured orthogonally to the lower sides 161, 171 and upper sides 162, 172 of the respective groove 16, 17 or to the bottom 13 of the central channel 12 which is greater than the height of the portion of the respective wall 14, 15 extending between the bottom 13 of the central channel 12 and the upper side 162, 172 of the respective groove 16, 17.

In the case wherein the return guide 10 is shaped according to an arc of a curve, the at least one wall 14, 15 at which the at least one hollow seat 18 is obtained housing a respective insert element 19 is at least the wall 14 which is radially innermost with respect to the centre of curvature CC of the arc of a curve.

According to the longitudinal extension of the return guide 10, the base body 11 can comprise at at least one of the walls 14, 15 (in the case of a curved return guide 10 at at least the radially innermost wall 14) a plurality of said hollow seats 18, each housing a respective insert element 19, which are distributed in succession one after the other and one spaced from the other along the longitudinal development of the base body 11.

In this case, the pitch between two successive hollow seats 18 is smaller than the pitch of the chain 100, so that the first faces 190 of the insert elements 19 which follow one after another ensure a continuity of support for the pivoting portions 102 of the chain links.

On the basis of the foregoing description, it is therefore evident that the grooves 16, 17 obtained on the inner sides of the walls 14, 15 of the base body 11 can be sized as a function of the maximum thickness of the plates 103 of the chain links which can be guided in the return guide 10.

In particular, the height L of the grooves 16, 17, measured in a direction orthogonal to the respective lower sides 161, 171 and upper sides 162, 172 or to the bottom 13 of the central channel 12, is sized to receive with clearance the plates 103 having the maximum thickness among those of a plurality of chains that differ from each other at least in the thickness of the respective plates 103.

When the return guide 10 is used to guide the return branch of a chain whose plates 103 have a thickness equal to the maximum thickness envisaged, the insert elements 19 are in their retracted or substantially retracted position, the respective sliding channel 160, 170 having maximum width or height H.

If the plates 103 of the chain have a thickness lower than the maximum thickness envisaged, the insert elements 19 are in their extended position (i.e. completely extended) or in an only partially retracted or backward position, the respective sliding channel 160, 170 having a width or height H smaller than the maximum possible width or height H.

As immediately understood by a person skilled in the art, the portion of the insert element 19 which extends into the groove 16, 17 when it is in its (fully) extended position has a height E (measured in the direction orthogonal to the lower sides 161, 171 and upper sides 162, 172 of the respective groove 16, 17 or to the bottom 13 of the central channel 12) sized to house with clearance the plates 103 of minimum thickness among those of a plurality of chains that differ from each other at least in the thickness of the respective plates 103.

In any case, the first face 190 of the insert elements 19 which laterally delimits the central channel 12 defines a containment surface and possible support and sliding surface for the pivoting portions 102 of the chain links of sufficient height to ensure correct containment and support.

From what has been described above, it is evident that the central channel 12 of the return guide 10 is delimited by the bottom 13 and at least on one side (in the case of a curved return guide 10, at least on the radially innermost side with respect to the centre of curvature) by the first faces 190 of the insert elements 19 slidingly inserted in respective hollow seats 18 obtained at the respective wall 14, 15. The other side of the central channel 12 is defined by the inner side of the other wall 14, 15 (in the case of a curved return guide 10, by the inner side of the radially outermost wall 15 with respect to the centre of curvature) or by the first faces 190 of the insert elements 19 slidingly inserted in respective hollow seats 18 obtained at the other wall 14, 15.

In the case wherein along the longitudinal development of the return guide 10 two or more hollow seats 18 follow each other, each housing a respective insert element 19, it is evident that the pitch between two successive hollow seats 18 and, therefore, between two successive insert elements 19, must be smaller than the pitch of the chain 100, so that the first faces 190 of the insert elements 19 which follow one after the other and which define a respective side of the central channel 12 ensure a continuity of support for the pivoting portions 102 of the chain links.

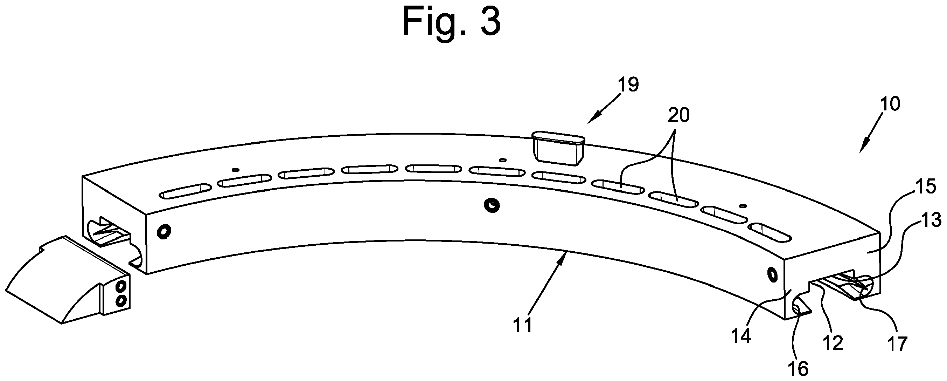

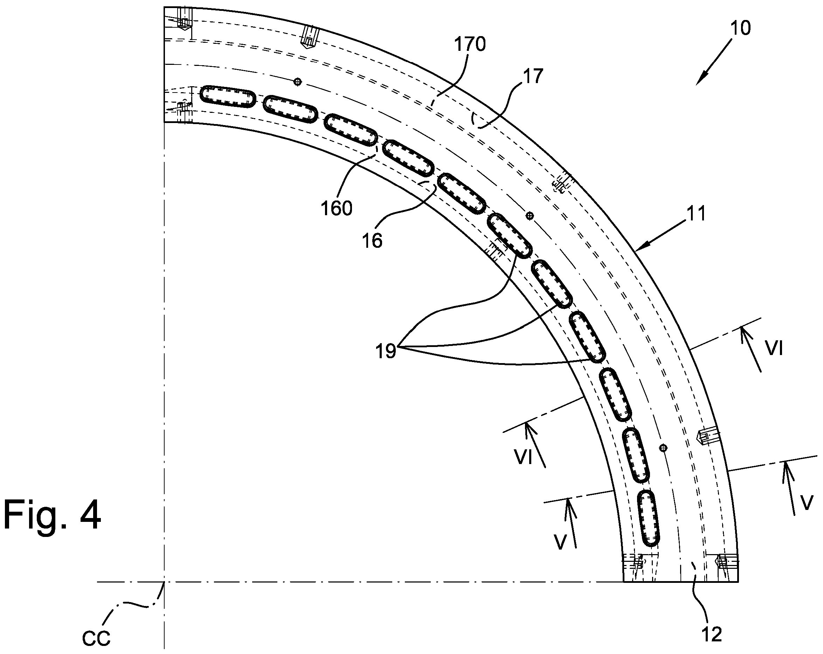

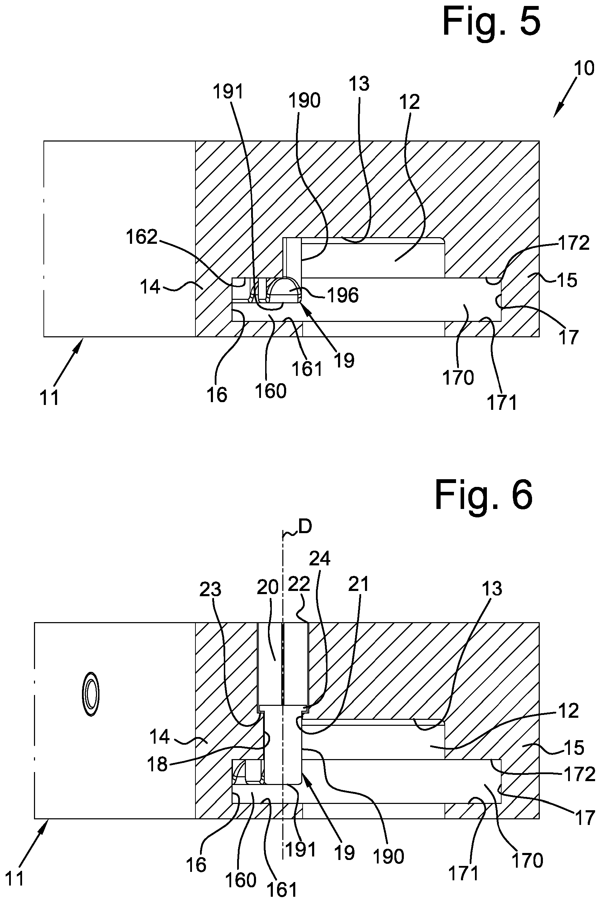

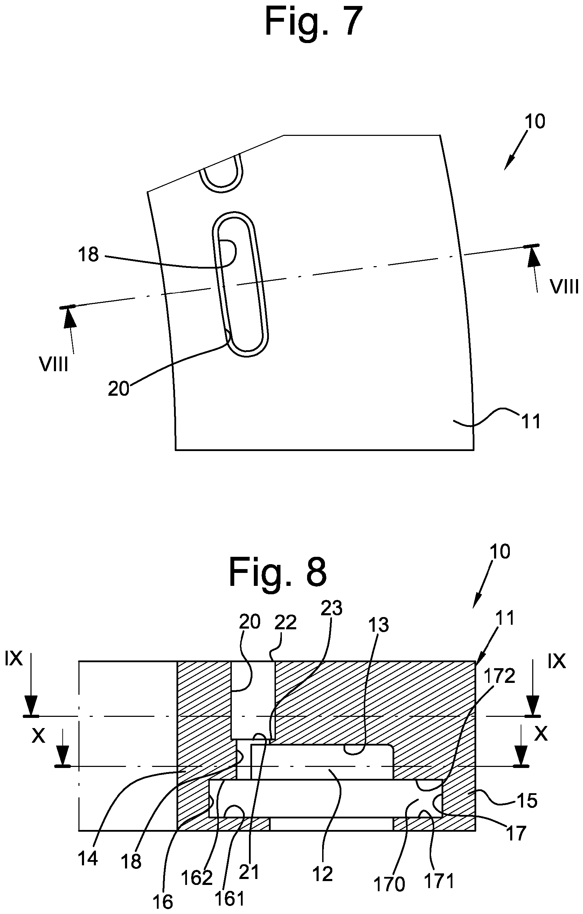

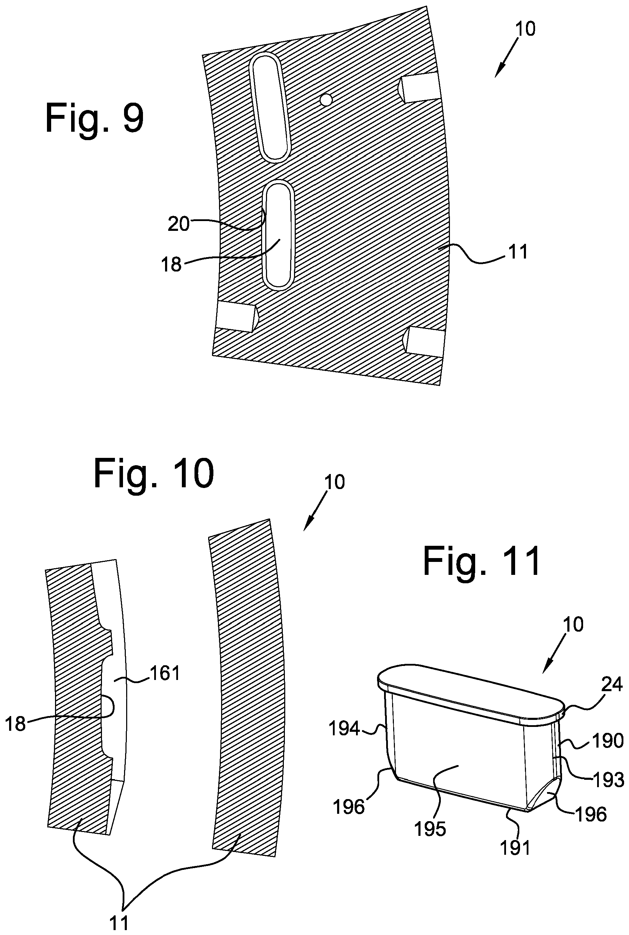

Figures 3 to 12A-12D show a curved return guide 10 wherein the base body 11 comprises only at the radially innermost wall 14 with respect to the centre of curvature CC a plurality of hollow seats 18 which are distributed one after the other and are spaced from one other and each housing a respective insert element 19 as described above.

As immediately comprehensible to a person skilled in the art, the insert elements 19 are retained in their extended position or at least partially retracted or backward position by the centripetal radial thrust exerted on them by the pivoting portions 102 of the chain links which supportingly slide on their first face 190.

Figures 12A to 12D show the return guide 10 of figures 3-10 in a use configuration for guiding chains which differ from one another at least in terms of thickness, indicated respectively with the reference Sa, Sb, Sc, Sd, of the respective plate-like portions 103, with Sa<Sb<Sc<Sd (for example Sa=3 mm, Sb=4 mm, Sc=8.70 mm, Sd=12.70 mm).

The grooves 16, 17 are sized according to the maximum thickness that the plates 103 of the chains can have, which can be guided by the return guide 10.

These grooves 16, 17 thus have a height or width L, measured orthogonally to the lower sides 161, 171 and upper sides 162, 172 of the respective groove 16, 17 or to the bottom 13 of the central channel 12, which is greater than the maximum thickness that the plate-like portions 103 can have (in the exemplified case L>Sd with L=14 mm).

Figure 12A shows the return guide 10 in the use configuration for guiding a chain whose plates 103 have the lowest thickness Sa. In this case, the insert elements 19 are in their fully extended position in the groove 16, they extend into the groove 16 past the upper side 162 of the groove 16 with a maximum portion Ea (in the exemplified case Ea=8 mm). The sliding channel 160 is delimited below by the lower side 161 of the groove 16 and above by the second face 191 of the insert elements 19; it receives the plates 103 with clearance Ga (in the exemplified case Ga=3 mm) which supportingly slide on the lower side 161 of the groove 16. The first face 190 of the insert elements 19 laterally delimits the central channel 12 and the portion thereof which protracts into the groove 16 ensures a support surface of height Aa sufficient to correctly maintain the chain links guided.

Figure 12B shows a situation quite similar to that shown in figure 12A, where in this case the thickness Sb is slightly greater than the thickness Sa (Sb=4 mm), but in any case such that the insert elements 19 remain in their (completely) extended position without interfering with the plates 103 which are received in the respective sliding channel 160 with clearance Gb (Gb=2 mm). Also in this case, the insert elements 19, being in their fully extended position in the groove 16, extend into the groove 16 past the upper side 162 of the groove 16 with a maximum portion Eb (in the exemplified case Eb=Ea=8 mm). Also in this case, the first face 190 of the insert elements 19 which laterally delimits the central channel 12 and the portion thereof which protracts into the groove 16 ensures a support surface of height Ab sufficient to correctly maintain the chain links guided.

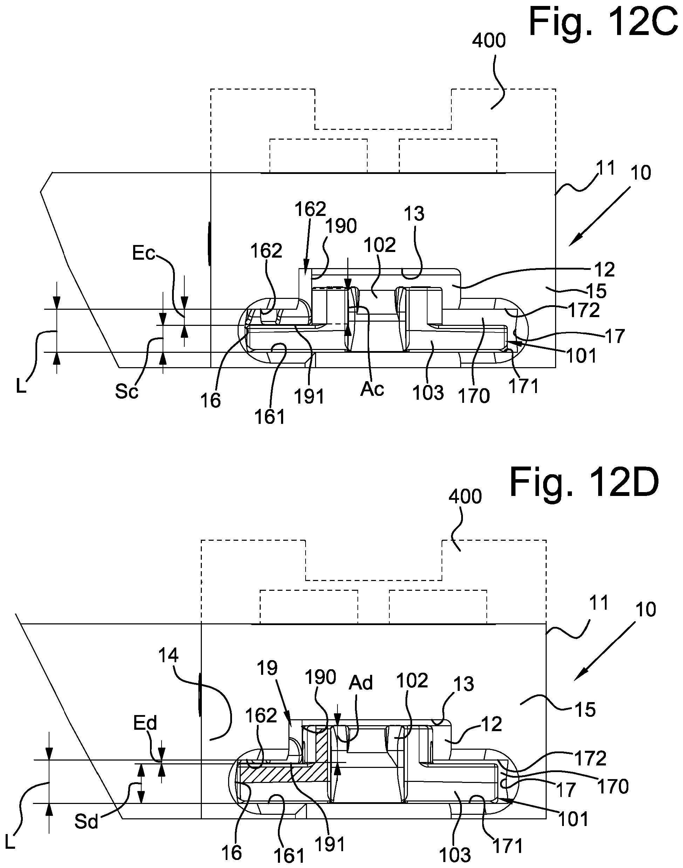

Figure 12D shows the return guide 10 in the use configuration for guiding a chain whose plates 103 have the greatest thickness Sd (Sd=12.7 mm). In this case, the plates 103 push the insert elements 19 into their retracted or backward position from the groove 16 towards the inside of the base body 11, that is upwards or towards the bottom 13 in contrast to the action of their weight force. The insert elements 19 extend into the groove 16 past the upper side 162 of the groove 16 with a minimum portion Ed (in the exemplified case Ed=1.3 mm). The sliding channel 160 is delimited below by the lower side 161 of the groove 16 and above by the second face 191 of the insert elements 19; it receives the plates 103 without clearance, which supportingly slide on the lower side 161 of the groove 16 and on which the second face 191 of the insert elements 19 rests. The first face 190 of the insert elements 19 laterally delimits the central channel 12 and ensures a support surface of maximum height Ad (i.e. equal to the height of the pivoting portions 102).

Figure 12C shows a situation similar to that of figure 12D, where in this case the thickness Sc is slightly lower than the thickness Sd (Sc=8.7 mm), but in any case such that the plates 103 push the insert elements 19 into a retracted or backward position from the groove 16 towards the inside of the base body 11, that is upwards or towards the bottom 13 in contrast to the action of their weight force. The insert elements 19 extend past the upper side 162 of the groove 16 of a greater portion Ec (in the exemplified case Ed=5.3 mm) with respect to Ed. The sliding channel 160 is delimited below by the lower side 161 of the groove 16 and above by the second face 191 of the insert elements 19; it receives the plates 103 without clearance, which supportingly slide on the lower side 161 of the groove 16 and on which the second face 191 of the insert elements 19 rests. The first face 190 of the insert elements 19 laterally delimits the central channel 12 and ensures a support surface of maximum height Ac (i.e. equal to the height of the pivoting portions 102) .

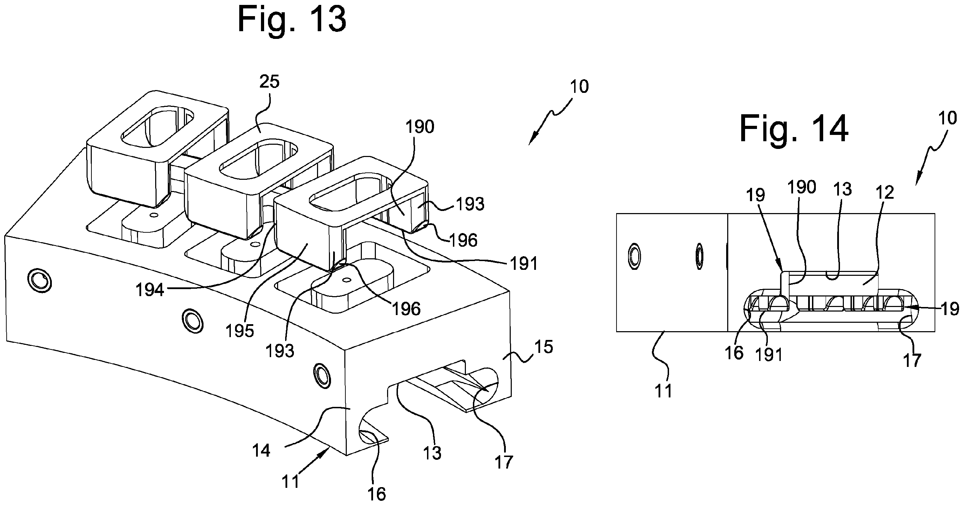

In a preferred embodiment shown in Figures 13 and 14, the base body 11 comprises one or more hollow seats 18, each of which receives a respective insert element 19, at each of the two walls 14, 15 facing each other.

In this case, advantageously, the hollow seats 18 obtained at the two walls 14, 15 face each other two by two and the respective insert elements 19 are joined together by a bridge element 25 to form a single body.

In the case wherein the return guide 10 is a curved guide, the insert elements 19 housed in the hollow seats 18 obtained in the radially outermost wall 15 have an anti-overturning effect on the chain links.

Thanks to the bridge element 25, the insert elements 19 of each pair are joined together to form a single body which is held in position also only by the radial action exerted by the chain links on the insert elements 19 housed in the hollow seats 18 of the radially innermost wall 14.

Advantageously, the base body 11 is made of a single piece.

It is noted that only for the sake of simplicity of representation, the return guide 10 shown in the attached figures has a single central channel 12 on the sides of which there are respective walls 14, 15, the return guide 10 according to the present invention being able to comprise a plurality of central channels which have respective walls extending on the sides of each, wherein the central channels and the respective walls can be obtained in separate base bodies which are side by side or in a single base body.

The operation of the return guide 10 according to the present invention is immediately comprehensible to a person skilled in the art in light of the description provided above and the attached figures.

The return guide which is the object of the present invention has the advantage of being standardisable at least for a defined range of chains which differ from each other at least in the thickness of the respective plate-like portions, ensuring the correct containment and support for the respective pivoting portions of the chains themselves.

The return guide according to the present invention is structurally simple and functional and does not require any manual intervention to adapt its use configuration to the different dimensions of the chains that can be guided therein, as the insert elements, in fact, spontaneously modify their position according to the thickness of the plate-like portions of the chain links without the need for any human intervention.

The return guide for guiding the return branch of a chain of a chain conveyor, in particular a curved return guide, thus conceived is susceptible to numerous modifications and variations, all of which are covered by the invention; moreover all the details can be substituted by technically equivalent elements. In practice, the materials used, as well as their dimensions, can be of any type according to the technical requirements.

## Claims

1. Return guide (10) for guiding the return branch of a chain (100) of a chain conveyor, in particular a curved return guide, wherein said chain (100) comprises a plurality of links (101) pivoted to one another at respective pivoting portions (102) by means of respective pins and each of which is provided with a plate-like portion (103) defining a conveying surface, wherein said return guide (10) comprises:
- a base body (11) in which at least one central channel (12), inside which the pivoting portions (102) of said links (101) are received, and a pair of walls (14, 15), which are arranged at the sides of said central channel (12), are obtained, wherein each of said walls (14, 15) comprises, on the respective inner side, a longitudinal groove (16, 17) defining a sliding channel (160, 170) wherein end portions of the plate-like portions (103) of said links (101) are slidably received,
**characterised in that**
- said base body (11) comprises at at least one of said walls (14, 15) at least one hollow seat (18) which is open at least at the respective said groove (16, 17) and in which a respective insert element (19) is housed, said insert element (19) being supported by said base body (11) in a slidingly guided manner along a direction (D) substantially orthogonal to the lower and upper sides (161, 162; 171, 172) of said respective groove or to the bottom (13) of said central channel (12) between at least one extended position, in which it extends inside said groove (16, 17) and one retracted position, in which it is at least partially retracted from said groove (16, 17), wherein said insert element (19) has a first face (190), which laterally delimits said central channel (12), and a second face (191), which is substantially orthogonal to said first face (190) and which delimits at the top the sliding channel (160, 170) defined by said respective groove (16, 17).

2. Return guide (10) according to claim 1, **characterised in that** said at least one hollow seat (18) is at least partially obtained in said wall (14, 15) and is also open at the inner side of said respective wall (14, 15).

3. Return guide (10) according to claim 1 or 2, **characterised in that** said insert element (19) has at least one portion having a shape substantially complementary to that of said hollow seat (18).

4. Return guide (10) according to one or more of the preceding claims, **characterised in that** said insert element (19) has a height measured orthogonally to the lower and upper sides (161, 162; 171, 172) of said respective groove or to the bottom (13) of said central channel (12) greater than the height of the portion of said respective wall (14, 15) which extends between the bottom (13) of said central channel (12) and the upper side (162, 172) of the respective said groove (16, 17).

5. Return guide (10) according to one or more of the preceding claims, **characterised in that** said at least one hollow seat (18) extends into a hollow housing (20) obtained in said base body (11) for containing and slidingly guiding said insert element (19) .

6. Return guide (10) according to claim 5, **characterised in that** said hollow housing (20) has a first open end (21) in communication with said hollow seat (18) and a second end (22), opposite said first end, open and accessible from the outside of said base body (11) on the opposite side with respect to the bottom (13) of said central channel (12) for the insertion and removal therethrough of said insert element (19), at least one stop element (23) being obtained between said first end (21) and said second end (22) for stopping the sliding of said insert element (19) in said extended position thereof.

7. Return guide (10) according to one or more of the preceding claims, **characterised in that** said insert element (19) is slidable between said at least one extended position thereof and said substantially retracted position thereof as a result of its own weight and of the opposite thrust exerted thereon by end portions of said links plate-like portions (103).

8. Return guide (10) according to one or more of the preceding claims, **characterised in that** the height of said grooves (16, 17), measured in a direction orthogonal to the respective lower and upper sides (161, 162; 171, 172) or to the bottom (13) of said central channel (12), is sized to receive with clearance the plate-like portions (103) having the maximum thickness among those of a plurality of chains that differ from each other at least in the thickness of the respective plate-like portions.

9. Return guide (10) according to one or more of the preceding claims, **characterised in that** said base body (11) comprises at said at least one wall (14, 15) a plurality of said hollow seats (18), each housing a respective insert element (19), which are distributed one after the other and one spaced from the other along the longitudinal extension of said base body (11).

10. Return guide (10) according to claim 9, **characterised in that** the pitch between two successive said hollow seats (18) or between two successive said insert elements (19) is less than the pitch of said chain.

11. Return guide (10) according to one or more of the preceding claims, **characterised in that** is it shaped according to an arc of a curve, said at least one wall (14, 15) being the radially innermost one with respect to the centre of curvature (CC) of said arc of a curve.

12. Return guide (10) according to one or more of the preceding claims, **characterised in that** said base body (11) comprises at each of said two walls (14, 15) at least one respective said hollow seat (18) housing a respective said insert element (19).

13. Return guide (10) according to claim 12, **characterised in that** the hollow seats (18) obtained at said two walls (14, 15) face each other, the respective said insert elements (19) being joined to each other by a bridge element (25) to form a single body.

14. Guide for guiding a chain (100) of a chain conveyor, comprising a forwarding guide of the forward branch of said chain and a return guide (10) of the return branch of said chain according to one or more of the preceding claims.

## Patentansprüche

1. Rücklaufführung (10) zum Führen des Rücklaufzweigs einer Kette (100) eines Kettenförderers, insbesondere eine gekrümmte Rücklaufführung, wobei die Kette (100) eine Vielzahl von Gliedern (101) aufweist, die an jeweiligen Schwenkabschnitten (102) mittels jeweiliger Stifte schwenkbar miteinander verbunden sind und von denen jedes mit einem plattenartigen Abschnitt (103) versehen ist, der eine Förderfläche definiert, wobei die Rücklaufführung (10) umfasst:
- einen Grundkörper (11), in dem mindestens ein zentraler Kanal (12), in dem die Schwenkabschnitte (102) der Glieder (101) aufgenommen sind, und ein Paar von Wänden (14, 15), die an den Seiten des zentralen Kanals (12) angeordnet sind, erhalten werden, wobei jede der Wände (14, 15) auf der jeweiligen Innenseite eine Längsnut (16, 17) aufweist, die einen Gleitkanal (160, 170) definiert, in dem Endabschnitte der plattenartigen Abschnitte (103) der Glieder (101) gleitend aufgenommen werden,
**dadurch gekennzeichnet, dass**
- der Basiskörper (11) an mindestens einer der Wände (14, 15) mindestens einen hohlen Sitz (18) aufweist, der mindestens an der jeweiligen Nut (16, 17) offen ist und in dem ein jeweiliges Einsatzelement (19) untergebracht ist, wobei das Einsatzelement (19) von dem Basiskörper (11) in einer gleitend geführten Weise entlang einer Richtung (D) im Wesentlichen orthogonal zu der Unter- und Oberseite (161, 162; 171, 172) der jeweiligen Nut getragen wird, oder zum Boden (13) des zentralen Kanals (12) zwischen mindestens einer ausgefahrenen Position, in der es sich in die Nut (16, 17) erstreckt, und einer zurückgezogenen Position, in der es mindestens teilweise aus der Nut (16, 17) zurückgezogen ist, gleitend geführt wird, wobei das Einsatzelement (19) eine erste Fläche (190), die den zentralen Kanal (12) seitlich begrenzt, und eine zweite Fläche (191) aufweist, die im Wesentlichen orthogonal zu der ersten Fläche (190) ist und die oben den Gleitkanal (160, 170) begrenzt, der durch die jeweilige Nut (16, 17) definiert ist.

2. Rücklaufführung (10) nach Anspruch 1, **dadurch gekennzeichnet, dass** der mindestens eine hohle Sitz (18) mindestens teilweise in der Wand (14, 15) erhalten wird und auch an der Innenseite der jeweiligen Wand (14, 15) offen ist.

3. Rücklaufführung (10) nach Anspruch 1 oder 2, **dadurch gekennzeichnet, dass** das Einsatzelement (19) mindestens einen Abschnitt mit einer Form aufweist, die im Wesentlichen komplementär zu der des hohlen Sitzes (18) ist.

4. Rücklaufführung (10) gemäß einem oder mehreren der vorstehenden Ansprüche, **dadurch gekennzeichnet, daß** das Einsatzelement (19) eine orthogonal zu der unteren und der oberen Seite (161, 162; 171, 172) der jeweiligen Nut oder zu dem Boden (13) des zentralen Kanals (12) eine gemessene Höhe aufweist, die größer ist als die Höhe des Abschnitts der jeweiligen Wand (14, 15), der sich zwischen dem Boden (13) des zentralen Kanals (12) und der oberen Seite (162, 172) der jeweiligen Nut (16, 17) erstreckt.

5. Rücklaufführung (10) gemäß einem oder mehreren der vorstehenden Ansprüche, **dadurch gekennzeichnet, dass** sich der mindestens eine hohle Sitz (18) in ein hohles Gehäuse (20) erstreckt, das in dem Grundkörper (11) zur Aufnahme und gleitenden Führung des Einsatzelements (19) erhalten wurde.

6. Rücklaufführung (10) nach Anspruch 5, **dadurch gekennzeichnet, dass** das hohle Gehäuse (20) ein erstes offenes Ende (21) in Verbindung mit dem hohlen Sitz (18) und ein zweites Ende (22) gegenüber dem ersten Ende aufweist, offen und von der Außenseite des Basiskörpers (11) aus auf der bezüglich des Bodens (13) des zentralen Kanals (12) gegenüberliegenden Seite zugänglich ist, um das Einsetzen und Entfernen des Einsatzelements (19) durch diesen hindurch zu ermöglichen, wobei mindestens ein Anschlagelement (23) zwischen dem ersten Ende (21) und dem zweiten Ende (22) vorgesehen ist, um das Gleiten des Einsatzelements (19) in seiner ausgefahrenen Position zu stoppen.

7. Rücklaufführung (10) gemäß einem oder mehreren der vorstehenden Ansprüche, **dadurch gekennzeichnet, daß** das Einsatzelement (19) zwischen seiner mindestens einen ausgefahrenen Position und seiner im Wesentlichen eingezogenen Position als Folge seines Eigengewichts und des entgegengesetzten Schubs, der durch Endabschnitte der plattenartigen Gliederabschnitte (103) darauf ausgeübt wird, verschiebbar ist.

8. Rücklaufführung (10) nach einem oder mehreren der vorhergehenden Ansprüche, **dadurch gekennzeichnet, dass** die Höhe der Nute (16, 17) in einer Richtung senkrecht zu den jeweiligen Unter- und Oberseiten (161, 162; 171, 172) oder zum Boden (13) des zentralen Kanals (12), so bemessen ist, dass sie mit Spiel die plattenartigen Abschnitte (103) mit der maximalen Dicke einer Vielzahl von Ketten aufnimmt, die sich voneinander zumindest in der Dicke der jeweiligen plattenartigen Abschnitte unterscheiden.

9. Rücklaufführung (10) gemäß einem oder mehreren der vorstehenden Ansprüche, **dadurch gekennzeichnet, daß** der Grundkörper (11) an der mindestens einen Wand (14, 15) eine Vielzahl an hohlen Sitzen (18) aufweist, von denen jeder ein entsprechendes Einsatzelement (19) aufnimmt, die nacheinander angeordnet sind und einer von dem anderen entlang der Längserstreckung des Grundkörpers (11) einen Abstand aufweist.

10. Rücklaufführung (10) nach Anspruch 9, **dadurch gekennzeichnet, dass** der Zwischenraum zwischen zwei aufeinanderfolgenden der genannten Hohlsitze (18) oder zwischen zwei aufeinander folgenden der genannten Einsatzelemente (19) kleiner ist als der Gliedabstand der genannten Kette.

11. Rücklaufführung (10) gemäß einem oder mehreren der vorhergehenden Ansprüche, **dadurch gekennzeichnet, dass** sie gemäß einem Bogen einer Kurve geformt ist, wobei die mindestens eine Wand (14, 15) die radial innerste in Bezug auf den Krümmungsmittelpunkt (CC) des Bogens einer Kurve ist.

12. Rücklaufführung (10) gemäß einem oder mehreren der vorstehenden Ansprüche, **dadurch gekennzeichnet, dass** der Grundkörper (11) an jeder der beiden Wände (14, 15) mindestens einen entsprechenden hohlen Sitz (18) aufweist, der ein entsprechendes Einsatzelement (19) aufnimmt.

13. Rücklaufführung (10) nach Anspruch 12, **dadurch gekennzeichnet, dass** die an den beiden Wänden (14, 15) erhaltenen hohlen Sitze (18) einander zugewandt sind, wobei die jeweiligen Einsatzelemente (19) durch ein Brückenelement (25) miteinander verbunden sind, um einen einzigen Körper zu bilden.

14. Führung zum Führen einer Kette (100) eines Kettenförderers, umfassend eine Vorlaufführung des Vorlaufzweigs der Kette und eine Rücklaufführung (10) des Rücklaufzweigs der Kette gemäß einem oder mehreren der vorhergehenden Ansprüche.

## Revendications

1. Guide de retour (10) pour guider la branche de retour d'une chaîne (100) d'un convoyeur à chaîne, notamment un guide de retour courbé, où ladite chaîne (100) comprend une pluralité de maillons (101) pivotés les uns vers les autres au niveau de parties pivotantes respectives (102) au moyen de broches respectives et dont chacune est pourvue d'une partie en forme de plaque (103) définissant une surface de transport, où ledit guide de retour (10) comprend :
- un corps de base (11) où au moins un canal central (12), dans lequel les parties pivotantes (102) desdits maillons (101) sont reçues, et une paire de parois (14, 15), qui sont disposées au niveau des côtés dudit canal central (12), sont obtenues, où chacune desdites parois (14, 15) comprend, sur le côté intérieur respectif, une rainure longitudinale (16, 17) définissant un canal de coulissement (160, 170) où des parties d'extrémité des parties en forme de plaque (103) desdits maillons (101) sont reçues de manière coulissante,
**caractérisé en ce que**
- ledit corps de base (11) comprend au moins une desdites parois (14, 15) au moins un siège creux (18) qui est ouvert au moins au niveau de ladite rainure respective (16, 17) et où un élément d'insertion respectif (19) est logé, ledit élément d'insertion (19) étant supporté par ledit corps de base (11) de manière guidée coulissante le long d'une direction (D) considérablement orthogonale aux côtés inférieur et supérieur (161, 162 ; 171, 172) de ladite rainure respective ou à la partie inférieure (13) dudit canal central (12) entre au moins une position étendue, où il s'étend à l'intérieur de ladite rainure (16, 17) et une position rétractée, où il est au moins partiellement rétracté de ladite rainure (16, 17), où ledit élément d'insertion (19) a une première face (190), qui délimite latéralement ledit premier canal central (12), et une seconde face (191), qui est considérablement orthogonale à ladite première face (190) et qui délimite au sommet le canal de coulissement (160, 170) défini par ladite rainure respective (16, 17).

2. Guide de retour (10) selon la revendication 1, **caractérisé en ce que** ledit au moins un siège creux (18) est au moins partiellement obtenu dans ladite paroi (14, 15) et est également ouvert au niveau du côté intérieur de ladite paroi respective (14, 15).

3. Guide de retour (10) selon la revendication 1 ou 2, **caractérisé en ce que** ledit élément d'insertion (19) a au moins une partie ayant une forme considérablement complémentaire à celle dudit siège creux (18).

4. Guide de retour (10) selon l'une ou plusieurs des revendications précédentes, **caractérisé en ce que** ledit élément d'insertion (19) a une hauteur mesurée orthogonalement aux côtés inférieur et supérieur (161, 162 ; 171, 172) de ladite rainure respective ou à la partie inférieure (13) dudit canal central (12) supérieure à la hauteur de la partie de ladite paroi respective (14, 15) qui s'étend entre la partie inférieure (13) dudit canal central (12) et le côté supérieur (162, 172) de ladite rainure respective (16, 17).

5. Guide de retour (10) selon l'une ou plusieurs des revendications précédentes, **caractérisé en ce que** ledit au moins un siège creux (18) s'étend dans un logement creux (20) obtenu dans ledit corps de base (11) pour contenir et guider de manière coulissante ledit élément d'insertion (19).

6. Guide de retour (10) selon la revendication 5, **caractérisé en ce que** ledit logement creux (20) a une première extrémité d'ouverture (21) en communication avec ledit siège creux (18) et une seconde extrémité (22), opposée à ladite première extrémité, ouverte et accessible de l'extérieur dudit corps de base (11) sur le côté opposé par rapport à la partie inférieure (13) dudit canal central (12) pour l'insertion et le retrait à travers celui-ci dudit élément d'insertion (19), au moins un élément d'arrêt (23) étant obtenu entre ladite première extrémité (21) et ladite seconde extrémité (22) pour arrêter le coulissement dudit élément d'insertion (19) dans ladite position étendue de celui-ci.

7. Guide de retour (10) selon l'une ou plusieurs des revendications précédentes, **caractérisé en ce que** ledit élément d'insertion (19) est coulissant entre ladite au moins une position étendue de celui-ci et ladite position considérablement rétractée de celui-ci en raison de son propre poids et de la poussée opposée exercée sur celui-ci par les parties d'extrémité desdites parties en forme de plaque de maillons (103).

8. Guide de retour (10) selon l'une ou plusieurs des revendications précédentes, **caractérisé en ce que** la hauteur desdites rainures (16, 17), mesurée dans une direction orthogonale aux côtés inférieur et supérieur respectifs (161, 162 ; 171, 172) ou à la partie inférieure (13) dudit canal central (12), est dimensionnée pour recevoir avec un espacement les parties en forme de plaque (103) ayant l'épaisseur maximale entre celles d'une pluralité de chaînes qui diffèrent les unes des autres au moins dans l'épaisseur des parties en forme de plaque respectives.

9. Guide de retour (10) selon l'une ou plusieurs des revendications précédentes, **caractérisé en ce que** ledit corps de base (11) comprend au niveau de ladite au moins une paroi (14, 15) une pluralité desdits sièges creux (18), chacun logeant un élément d'insertion respectif (19), qui sont distribués l'un après l'autre et l'un espacé de l'autre le long de l'extension longitudinale dudit corps de base (11).

10. Guide de retour (10) selon la revendication 9, **caractérisé en ce que** la division entre deux desdits sièges creux successifs (18) ou entre deux desdits éléments d'insertion successifs (19) est inférieure à la division de ladite chaîne.

11. Guide de retour (10) selon l'une ou plusieurs des revendications précédentes, **caractérisé en ce qu'**il est formé selon un arc d'une courbe, ladite au moins une paroi (14, 15) étant la plus interne radialement par rapport au centre de courbure (CC) dudit arc d'une courbe.

12. Guide de retour (10) selon l'une ou plusieurs des revendications précédentes, **caractérisé en ce que** ledit corps de base (11) comprend au niveau de chacune desdites deux parois (14, 15) au moins un dit siège creux respectif (18) logeant un dit élément d'insertion respectif (19).

13. Guide de retour (10) selon la revendication 12, **caractérisé en ce que** les sièges creux (18) obtenus au niveau desdites deux parois (14, 15) se font face, lesdits éléments d'insertion respectifs (19) étant reliés les uns aux autres par un élément de pont (25) pour former un corps unique.

14. Guide pour guider une chaîne (100), comprenant un guide de transfert pour la branche avant de ladite chaîne et un guide de retour (10) de la branche de retour de ladite chaîne selon l'une ou plusieurs des revendications précédentes.
